# FASCICULE DE BREVET EUROPEEN

(11) **EP 2 115 750 B1**
(45) Date de publication et mention de la délivrance du brevet: **16.10.2013**
(21) Numéro de dépôt: 07858207.9
(22) Date de dépôt: 28.12.2007
(51) Int. Cl.: G21C 19/00, B21D 37/04, B23P 19/04, B25B 27/04, B25B 27/08, B25B 27/20

(54) **OUTILLAGE SERVANT AU SERTISSAGE ET AU CHASSAGE PAR PRESSION D'UNE CLAVETTE**
WERKZEUGSYSTEM ZUM EIN- BZW AUSPRESSEN EINES HALTEKEILS
TOOL FOR THE PRESSURE CRIMPING AND DRIVING-OUT OF A CLEAT

(30) Priorité: 03.01.2007 FR 0752518
(43) Date de publication de la demande: 11.11.2009
(73) Titulaire: Areva NC, 75009 Paris (FR)
(72) Inventeur: BARRE, Didier, 30130 Saint Paulet de Caisson (FR)
(74) Mandataire: Ilgart, Jean-Christophe
(86) Numéro de dépôt international: PCT/EP2007/064611
(87) Numéro de publication internationale: WO 2008/080967

(56) Documents cités:
- EP-A- 0 636 459
- WO-A-02/49476
- GB-A- 912 703
- JP-A- 10 216 858
- JP-A- 2003 002 342
- US-A1- 2003 084 555

## Description

La présente invention se rapporte à un outillage servant au sertissage par pression d'une clavette/goupille dans un élément ainsi qu'à l'extraction par chassage par pression de la clavette/goupille hors de cet élément.

EP 0 636 459 A décrit un outillage servant au sertissage par pression d'une cheville dans une chaîne ainsi qu'à l'extraction par chassage par pression de ladite cheville hors de cette chaîne. Cet outillage comprend un réceptacle de la chaîne en regard duquel est placée une tête de sertissage / chassage par pression. L'outillage comprend en outre des moyens de pression pour effectuer le sertissage ou le chassage.

Une application préférée mais en aucun cas limitative de la présente invention concerne le sertissage/chassage par pression d'une clavette/ goupille établissant une liaison mécanique entre une tulipe mécanique et son verrou formant conjointement une pince, de préférence utilisée pour coopérer avec un crayon de combustible nucléaire dans le cadre de son introduction dans un panier de rangement également dit squelette, et/ou de son extraction hors de ce panier.

Pour ce faire, l'invention a pour objet un outillage servant au sertissage par pression d'une clavette/goupille dans un élément ainsi qu'à l'extraction par chassage par pression de la clavette/goupille hors de cet élément, cet outillage comprenant :
- un premier réceptacle de l'élément en regard duquel se situe une tête de sertissage par pression destinée à coopérer avec la clavette/goupille, cette tête de sertissage par pression étant montée mobile selon une première direction sur un corps de l'outillage ;
- un second réceptacle de l'élément en regard duquel se situe une tête de chassage par pression destinée à coopérer avec la clavette/goupille, cette tête de chassage par pression étant également montée mobile selon une seconde direction sur le corps de l'outillage ; et
- des moyens de pression montés mobiles sur le corps de l'outillage de manière à pouvoir être déplacés d'une position de sertissage dans laquelle ils sont capables d'exercer une pression sur la tête de sertissage par pression afin d'entraîner son déplacement dans la première direction, à une position de chassage dans laquelle ils sont capables d'exercer une pression sur la tête de chassage par pression afin d'entraîner son déplacement dans la seconde direction, et inversement.

Ainsi, l'invention présente avantageusement la particularité de réunir les fonctionnalités de sertissage par pression et de chassage par pression d'une clavette/goupille au sein d'un même outillage, tout en conservant un encombrement réduit résultant essentiellement de la mobilité des moyens de pression, qui peuvent en effet être employés alternativement pour mettre la tête de sertissage en pression lors d'une opération de mise en place la clavette/goupille dans l'élément concerné, et pour mettre la tête de chassage en pression lors d'une opération d'extraction de cette clavette/goupille hors de l'élément.

De préférence, le corps de l'outillage présente un premier et un second logements recevant respectivement la tête de sertissage par pression et la tête de chassage par pression. De plus, les premier et second logements et les tête de sertissage par pression et tête de chassage par pression disposent d'une géométrie formant système de détrompage interdisant le montage de la tête de sertissage par pression dans le second logement, et interdisant également le montage de la tête de chassage par pression dans le premier logement. De cette façon, les risques de détérioration de l'élément concerné qui pourraient se produire si la tête de sertissage était installée sur la partie de l'outillage dédiée au chassage, ou inversement, sont totalement réduits à néant.

A titre indicatif, si la tête de sertissage était installée sur la partie de l'outillage dédiée au chassage, donc à la place de la tête de chassage, des problèmes pourraient survenir en raison de la présence d'un dégagement en partie basse de l'outillage, permettant la récupération de la clavette/goupille après extraction de celle-ci. En effet, vu la géométrie du poinçon de sertissage, la goupille/clavette peut soit commencer à se sertir, glisser et se bloquer dans son emplacement avec le poinçon toujours dans la goupille/clavette, soit pousser en travers et se coincer dans son emplacement. Dans les deux cas, il existe un grand risque de détérioration des éléments concernés.

Toujours à titre indicatif, si la tête de chassage était installée sur la partie de l'outillage dédiée au sertissage, donc à la place de la tête de sertissage, la tête de chassage viendrait en butée contre la goupille/clavette, sans pour autant provoquer le sertissage escompté. De ce fait, la goupille/ clavette peut facilement s'extraire de son logement lors de l'emploi ultérieur de l'élément intégrant la clavette, avec toutes les conséquences néfastes que cette situation peut engendrer.

D'autre part, on peut faire en sorte que les géométries adoptées permettent l'introduction de chaque tête dans son orifice associé uniquement lorsque celle-ci se trouve dans une orientation unique et prédéterminée par rapport au corps, assurant ainsi un positionnement correct de chacune des têtes par rapport au corps de l'outillage.

De préférence, la tête de sertissage par pression est équipée de moyens de butée capables d'entrer en contact avec le corps, afin de limiter la course de la tête de sertissage par pression, selon la première direction, par rapport au corps de l'outillage. Cette particularité permet avantageusement à l'opérateur de disposer d'un moyen sûr lui indiquant la fin du sertissage, et rend surtout impossible l'application sur la clavette d'une pression sur une course supérieure à celle qui est reconnue suffisante, du fait de l'entrée en contact des moyens de butée contre le corps de l'outillage. Les risques de détérioration de l'élément et de la clavette durant le sertissage sont donc fortement réduits.

Naturellement ce système de butée de fin de course peut être prévu sur la tête de chassage par pression, sans sortir du cadre de l'invention.

De manière préférentielle, l'outillage comprend en outre des premiers moyens de centrage de l'élément par rapport à la tête de sertissage par pression, contre lesquels l'élément est destiné à être en appui lorsqu'il repose dans le premier réceptacle, et comprend en outre des seconds moyens de centrage de l'élément par rapport à la tête de chassage par pression, contre lesquels l'élément est destiné à être en appui lorsqu'il repose dans le second réceptacle.

Bien entendu, cette configuration aide fortement l'opérateur à positionner l'élément sur l'outillage de sorte que la clavette/goupille soit parfaitement en regard de la tête de pression concernée.

Toujours de manière préférentielle, les première et seconde directions attachées respectivement aux tête de sertissage par pression et tête de chassage par pression sont des directions de coulissement parallèles.

D'autre part, les moyens de pression sont de préférence montés libres en rotation sur le corps de l'outillage, de sorte que ces moyens de pression puissent être déplacés de la position de sertissage à la position de chassage, et inversement, par rotation de ces moyens de pression par rapport au corps, selon un axe de rotation. Ainsi, le passage de l'une à l'autre des deux positions peut avantageusement s'effectuer sans démontage des moyens de pression montés sur le corps de l'outillage, ce qui offre une facilité et une rapidité de manipulation très appréciables pour l'opérateur.

De préférence, les moyens de pression comprennent une tige de pression montée sur un support de tige de façon à pouvoir être déplacée par rapport à celui-ci selon une direction de pression, le support étant monté libre en rotation sur un pion de pivotement appartenant au corps de l'outillage et s'étendant selon un axe de rotation des moyens de pression.

Dans un tel cas, on peut prévoir que la tige de pression est montée sur le support de tige de façon à pouvoir être déplacée par vissage par rapport à celui-ci, selon la direction de pression. Naturellement, d'autres types de liaison mécanique auraient pu être envisagés entre la tige de pression et son support, telle qu'une liaison à engrenage(s), sans sortir du cadre de l'invention.

Par ailleurs, on prévoit de préférence que le support de tige des moyens de pression est bloqué en translation par rapport au pion de pivotement, selon l'axe de rotation, par exemple à l'aide de deux bagues de butée montées fixement sur ce pion de pivotement respectivement de part et d'autre du support de tige, selon l'axe de rotation.

Enfin, on peut faire en sorte que les moyens de pression comprennent en outre un levier de commande monté sur la tige de pression, par exemple afin de faciliter sa mise en mouvement par rapport au support dans la direction de pression, en particulier lorsque cette mise en mouvement est obtenue par vissage comme cela constitue une solution préférée de la présente invention.

D'autre part, l'invention a également pour objet un procédé de sertissage par pression d'une clavette/goupille dans un élément, le procédé étant mis en oeuvre à l'aide d'un outillage tel que décrit ci-dessus en plaçant l'élément dans le premier réceptacle, puis en actionnant les moyens de pression placés dans la position de sertissage afin qu'ils coopèrent avec la tête de sertissage par pression.

L'invention a également pour objet un procédé d'extraction par chassage par pression d'une clavette/goupille hors d'un élément dans lequel elle est sertie, le procédé étant mis en oeuvre à l'aide d'un outillage tel que décrit ci-dessus en plaçant l'élément dans le second réceptacle, puis en actionnant les moyens de pression placés dans la position de chassage afin qu'ils coopèrent avec la tête de chassage par pression.

Dans les deux procédés exposés ci-dessus, on fait de préférence en sorte que l'élément concerné est une pince comprenant une tulipe mécanique et un verrou de tulipe entourant cette tulipe et capable d'être déplacé relativement le long de celle-ci selon une direction d'actionnement afin d'engendrer une ouverture/fermeture de la tulipe mécanique, la clavette/goupille étant destinée à être sertie dans un orifice traversant d'une tige de tulipe de cette tulipe mécanique. Naturellement, ces deux procédés pourraient alternativement s'appliquer à des pinces intégrant une clavette/goupille et dont le verrou de tulipe serait situé intérieurement par rapport à la tulipe mécanique, sans sortir du cadre de l'invention.

Dans le cas du verrou entourant la tulipe mécanique, il est de préférence prévu que l'orifice traversant de la tige de tulipe est pratiqué selon une direction orthogonale à la direction d'actionnement, et d'autre part que la clavette/goupille est destinée à présenter deux extrémités coulissantes selon la direction d'actionnement, respectivement dans deux trous oblongs opposés pratiqués sur le verrou de tulipe entourant la tulipe mécanique.

Enfin, il est noté que l'élément est préférentiellement une pince destinée à coopérer avec un crayon de combustible nucléaire pour son introduction dans un panier de rangement et/ou son extraction hors de ce panier, cette pince étant de préférence montée à une extrémité d'un tirant dont l'autre extrémité peut être équipée de la commande de la tulipe mécanique.

D'autres avantages et caractéristiques de l'invention apparaîtront dans la description détaillée non limitative ci-dessous.

Cette description sera faite au regard des dessins annexés parmi lesquels ;
- la figure 1 représente une vue partielle en coupe d'un dispositif de manipulation de crayons de combustible nucléaire, disposant d'une clavette capable d'être sertie par pression dans un élément donné du dispositif, ainsi que d'être extraite par chassage par pression hors de ce même élément à l'aide d'un outillage selon la présente invention ;
- la figure 2 représente une vue en coupe prise le long de la ligne II-II de la figure 1 ;
- la figure 3 représente une vue agrandie d'une partie du dispositif de manipulation formant pince de préhension des crayons de combustible, sur laquelle ladite clavette est destinée à être sertie par pression ;

- les figures 4 et 5 représentent des vues de côté du dispositif de manipulation montré sur la figure 1, dans des états différents, permettant de comprendre son fonctionnement ;
- la figure 6 représente une vue en perspective d'un outillage se présentant sous la forme d'un mode de réalisation préféré de la présente invention ;
- la figure 7 représente une vue de face de l'outillage montré sur la figure 6 ;
- les figures 7a et 7b montrent des vues en coupe transversale des têtes de l'outillage montré sur la figure 6, prises respectivement le long des lignes VIIA-VIIA et VIIB-VIIB de la figure 7 ;
- la figure 8 représente une vue de côté de l'outillage montré sur les figures 6 et 7 ;
- la figure 9 illustre la mise en oeuvre d'un procédé selon l'invention de sertissage par pression d'une clavette/goupille dans un élément, appliquée à la clavette du dispositif de manipulation montré sur les figures 1 à 5 et réalisée à l'aide de l'outillage montré sur les figures 6 à 8 ; et
- la figure 10 illustre la mise en oeuvre d'un procédé selon l'invention d'extraction par chassage par pression d'une clavette/goupille hors d'un élément dans lequel elle est sertie, appliquée à la clavette du dispositif de manipulation montré sur les figures 1 à 5 et réalisée à l'aide de l'outillage montré sur les figures 6 à 8.

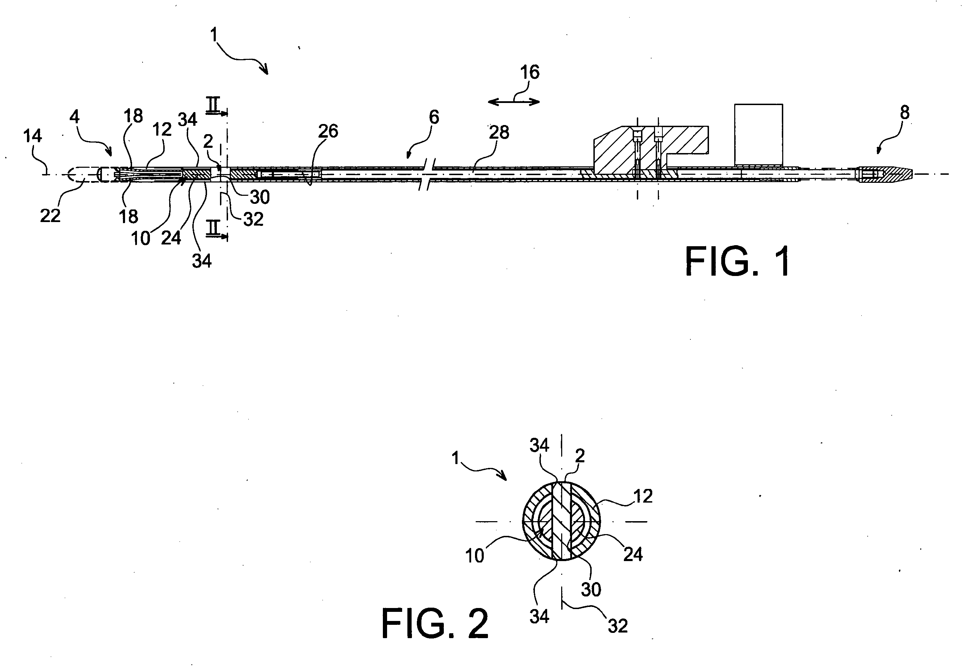

En référence tout d'abord aux figures 1 à 3, on peut apercevoir un dispositif de manipulation 1 de crayons de combustible nucléaire (non représentés), ce dispositif disposant notamment, comme cela va être décrit en détail ci-après, d'une clavette 2 capable d'être sertie par pression dans un élément donné du dispositif, ainsi que d'être extraite par chassage par pression hors de ce même élément à l'aide d'un outillage selon la présente invention.

Globalement, ce dispositif de manipulation 1 est classique et connu de l'homme du métier. Pour cette raison, la description qui en sera faite ci-dessous restera sommaire.

Le dispositif 1 présente essentiellement une pince de préhension 4 située à l'une des extrémités de celui-ci, une commande de cette pince 8 déportée à l'autre extrémité de ce dispositif, ainsi qu'une partie centrale 6 dénommée tirant s'étendant en longueur entre les deux extrémités, sur une distance pouvant avoisiner plusieurs mètres, par exemple environ sept mètres.

La pince 4 comporte une tulipe mécanique 10 et un verrou de tulipe 12 entourant cette dernière, le verrou 12 prenant ici la forme d'un tube ou d'une enveloppe s'étendant de préférence selon la quasi-totalité de la longueur du dispositif 1, d'axe longitudinal 14. Le verrou 12 est donc capable d'être déplacé relativement le long de la tulipe 10 selon une direction d'actionnement 16 parallèle à l'axe 14, afin d'engendrer une ouverture/fermeture de la tulipe mécanique 10.

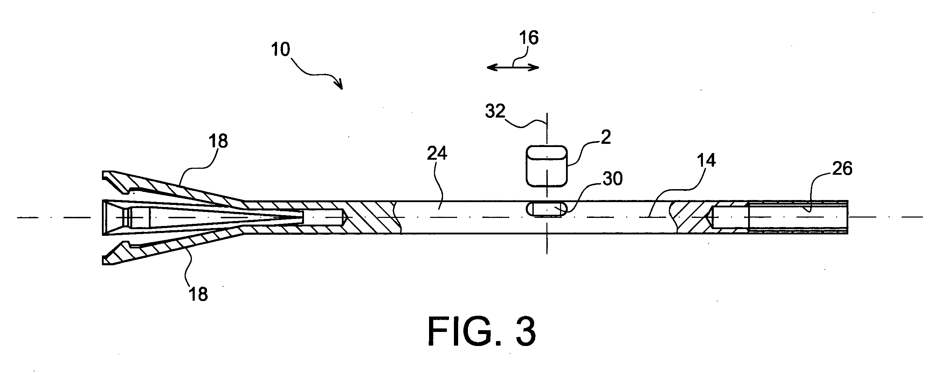

Comme le montrent les figures 1 et 3, la tulipe mécanique 10 est pourvue à son extrémité de têtes 18 espacées circonférentiellement et destinées à être en contact extérieurement avec le verrou 12, ce dernier constituant une butée radiale extérieure pour les têtes, permettant leur rabattement radial vers l'intérieur. A titre indicatif, sur la figure 1, le dispositif 1 se trouve dans un état où les têtes 18 totalement rabattues radialement vers l'intérieur permettent la mise en place d'un bouchon de protection 22 destiné à protéger la pince 4, et en particulier ses têtes de préhension 18. Cet état est bien entendu adopté pendant les périodes de non-utilisation du dispositif de manipulation 1.

Dans ce type de mécanisme où le positionnement relatif selon la direction 16 entre le verrou 12 et la tulipe mécanique 10 peut être ajusté, cette dernière est conçue de sorte que ses têtes 18 soient déployées au maximum dans leur position nominale, c'est-à-dire lorsqu'elles sont non-contraintes par le verrou 12, comme montré sur la figure 3. Ainsi, comme mentionné ci-dessus, c'est le verrou 12 placé à l'extérieur de la tulipe qui permet de rabattre les têtes 18 déployées, la conception retenue étant en effet telle que l'ampleur du déploiement des têtes 18 est directement liée au positionnement du verrou par rapport à la tulipe.

Par ailleurs, les têtes 18 sont portées par une tige de tulipe 24, agencée selon l'axe longitudinal 14, et dont l'extrémité opposée à celle portant les têtes 18 est pourvue d'un filetage 26 pour son montage sur un cylindre intérieur 28 s'étendant jusqu'à la commande 8.

Pour permettre le guidage du verrou 12 par rapport à la tulipe 10 lors du mouvement relatif entre ces deux pièces selon la direction d'actionnement 16, il est donc prévu une clavette 2 sertie dans un orifice traversant 30 de la tige de tulipe 24, cet orifice 30 étant préférentiellement de forme oblong comme cela est le mieux visible sur la figure 3, et pratiqué selon un axe 32 orthogonal à l'axe longitudinal 14 du dispositif.

Par ailleurs, la clavette 2 de forme oblong sensiblement complémentaire de celle de l'orifice traversant 30 présente deux extrémités faisant respectivement saillie de part et d'autre de la tige de tulipe 24, et montées coulissantes selon la direction d'actionnement 16 respectivement dans deux trous oblongs 34 opposés, pratiqués sur le verrou de tulipe 12. Naturellement, pour autoriser un déplacement relatif entre la tige 24 portant fixement la clavette 2 et le verrou 12 coopérant avec les extrémités de cette dernière, les trous oblongs 34 présentent une dimension longitudinale selon la direction 16 plus importante que celle du trou oblong traversant 30, étant bien entendu que ces trous oblongs 34 sont également pratiqués traversants sur le verrou 10 en forme de tube ou d'enveloppe.

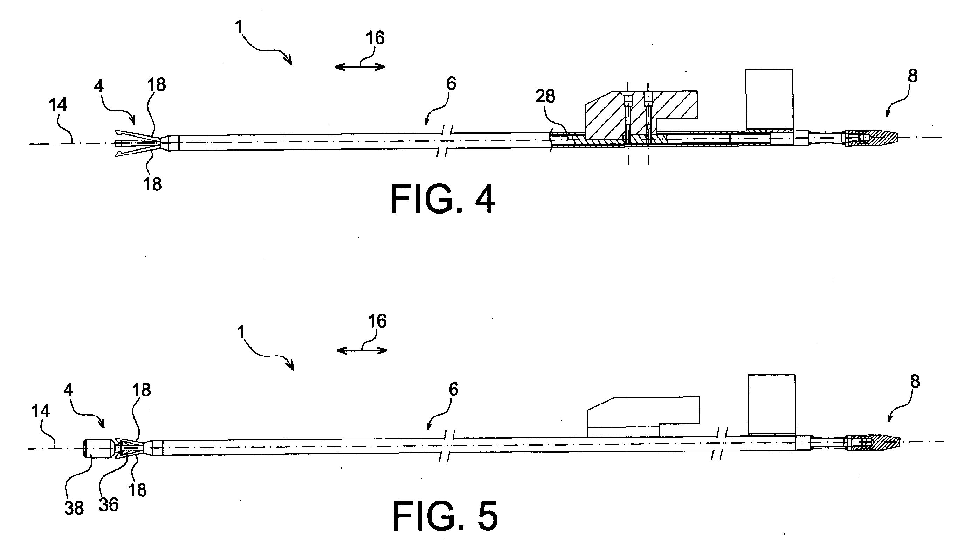

Ainsi, la figure 4 montre que lors d'un mouvement relatif selon la direction d'actionnement 16 entre la tulipe 10 et le verrou 12 visant à rapprocher ce dernier de la commande 8, il est observé une libération progressive des têtes 18 retrouvant leur position déployée de repos. Dans cette configuration, il devient alors possible d'introduire entre les têtes 18 une extrémité de raccordement 36 d'un crayon de combustible nucléaire 38, avant d'effectuer à nouveau un mouvement relatif de sens contraire entre la tulipe 10 et le verrou 12, visant cette fois-ci à éloigner ce dernier de la commande 8, dans le but de rabattre radialement intérieurement les têtes 18 à l'aide du verrou 12 jusqu'à ce que ces têtes 18 exercent une pression de retenue suffisante sur l'extrémité de raccordement 36 du crayon de combustible nucléaire 38 pour que celui-ci soit correctement maintenu sur le dispositif de manipulation 1, comme cela a été schématisé sur la figure 5.

Ensuite, le crayon 38 peut alors être manipulé par le dispositif 1, par exemple pour assurer son extraction d'un squelette, ou son introduction dans celui-ci.

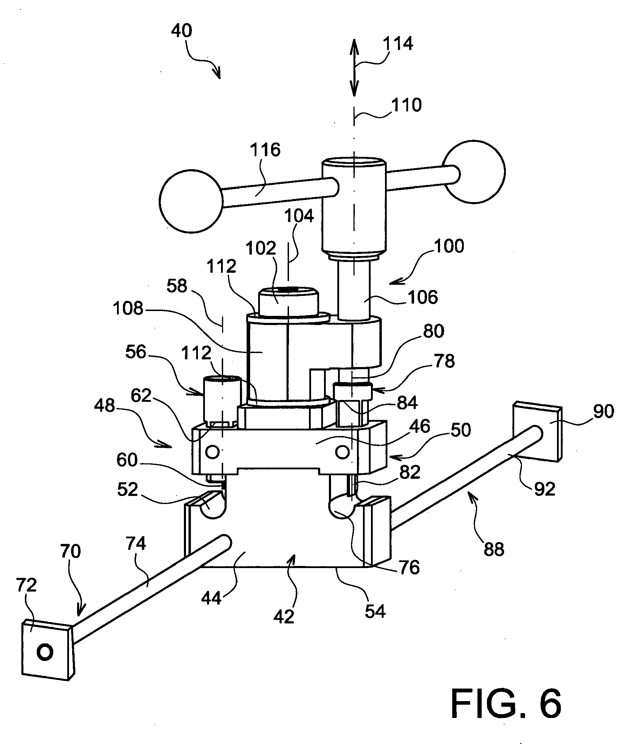

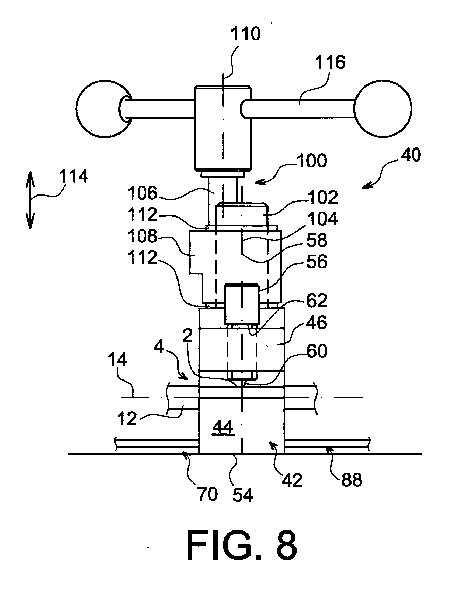

L'outillage 40 qui va maintenant être décrit en référence aux figures 6 à 8, objet de la présente invention, est conçu pour être utilisé pour assurer alternativement le sertissage par pression de la clavette 2 dans la tige de tulipe 24, et l'extraction par chassage par pression de cette clavette 2 hors de la tige.

En ce qui concerne l'opération d'extraction par chassage par pression, celle-ci peut être réalisée lors d'opérations de maintenance nécessitant la désolidarisation de la tulipe mécanique 10 et du verrou 12. En effet, le dévissage de la tulipe 10 montée sur le cylindre intérieur 28 par le biais du filetage 26 ne peut être effectué qu'après avoir retiré la clavette 2 de son orifice 30.

En outre, l'opération de sertissage par pression peut quant à elle être réalisée lors de ces mêmes opérations de maintenance, suite à la désolidarisation de la tulipe mécanique 10 et du verrou 12, après que la tulipe 10 ait été remontée par vissage sur le cylindre intérieur 28. De plus, cette opération de sertissage doit également être réalisée lors de l'assemblage d'un dispositif de manipulation neuf.

L'outillage 40 montré sur les figures 6 à 8, constituant un outillage portable de faible encombrement, présente tout d'abord un corps 42 pourvu d'une embase 44 et d'un porte-têtes 46 lui étant solidarisé.

Globalement, il est divisé en deux portions opposées par rapport à un plan vertical, la première portion 48 étant dédiée au sertissage par pression alors que la seconde portion 50 est dédiée au chassage par pression. A cet égard, des inscriptions claires sont prévues sur chacune de ces portions 48, 50, telles que « sertissage » et « chassage », afin de permettre à l'utilisateur de faire rapidement son choix de la portion adaptée à l'opération concernée, sans risque de se tromper.

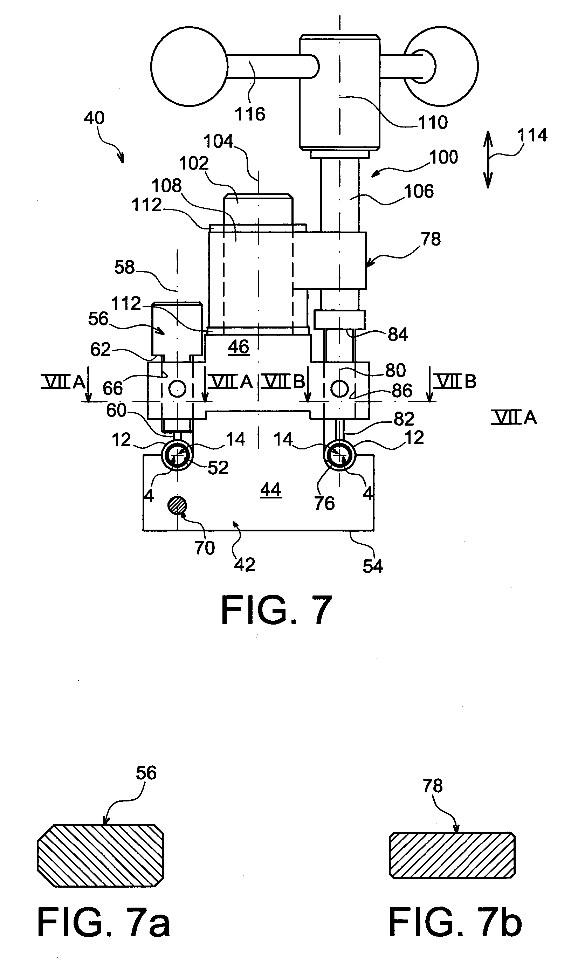

Ainsi, pour la première portion 48, un premier réceptacle 52 de la pince 4 est pratiqué sur l'embase 44, ce réceptacle 52 disposant par exemple d'une section semi-circulaire de forme complémentaire de celle de l'extérieur de la pince 4, à savoir celle de la surface extérieure du verrou 12 comme cela est le mieux visible sur la figure 7. L'ouverture de ce réceptacle 52 est orientée vers le haut, à savoir opposée à une surface d'appui 54 de l'embase sur laquelle cette dernière est destinée à reposer, par exemple sur un support appelé « banc tireur ».

En regard de ce réceptacle 52 se trouve une tête de sertissage par pression 56 destinée à coopérer avec la clavette 2, cette tête de sertissage 56 étant montée mobile selon une première direction de coulissement 58 sur le porte-têtes 46, cette première direction 58 étant de préférence parallèle à la verticale, et donc orthogonale à l'horizontale selon laquelle la pince 4 est destinée à reposer dans le réceptacle 52 lors d'une opération de sertissage de la clavette 2.

A titre indicatif, la tête de sertissage 56 prend globalement une forme connue de l'homme du métier, notamment en ce qui concerne la présence d'un poinçon de sertissage 60 au niveau de son extrémité prévue pour entrer en contact avec la clavette 2. Sur la figure 6, on peut voir que la tête de sertissage 56 est maintenue au repos dans une position haute alors que le poinçon 60 n'est pas au contact de la clavette, ni d'aucun autre élément. Cette fonctionnalité, de préférence adoptée, peut par exemple être réalisée à l'aide de moyens élastiques de rappel (non représentés) agencés entre le porte-têtes 46 et la tête de sertissage 56, ou bien à l'aide d'un ajustage adapté. Dans un tel cas, il peut alors être fait en sorte que l'espace laissé libre sous le poinçon 60 soit suffisant pour introduire la pince 4 horizontalement, par insertion de celle-ci dans le réceptacle 52 selon son axe longitudinal 14.

Comme visible sur les figures 6 à 8, la tête de sertissage 56 est équipée de moyens de butée 62, prenant par exemple la forme d'un épaulement, dont le but est de limiter sa course par rapport au corps 42 lors du sertissage. De cette manière, la course de sertissage est prédéfinie par rapport à la géométrie de l'outillage 40 et celle de la pince 4, de sorte que les risques de détérioration de cette dernière sont fortement amoindris. Effectivement, lorsque l'épaulement 62 entre en butée de fin de course contre le porte-têtes 46, l'opérateur est avantageusement informé que l'opération de sertissage est achevée, et ne peut de toute façon plus exercer de pression supplémentaire sur la clavette 2.

Comme cela est le mieux visible sur la figure 7, la tête de sertissage 56 est logée dans un premier logement traversant 66 du porte-têtes 46, à travers lequel il est donc en mesure de coulisser selon la première direction 58. De préférence, on peut faire en sorte que les géométries adoptées pour le premier logement 66 et la partie coulissante de la tête de sertissage 56 permettent l'introduction de celle-ci dans son orifice associé uniquement lorsqu'elle se trouve dans une orientation unique et prédéterminée par rapport au porte-têtes 46, ce qui assure avantageusement un positionnement correct du poinçon de sertissage 60 par rapport au corps 42, et donc par rapport à la clavette 2 à sertir. Les risques d'endommagement de la pince 4 lors du sertissage de la clavette 2 s'en trouvent de ce fait fortement amoindris.

Enfin, il est également prévu des premiers moyens de centrage 70 de la pince 4, rapportés fixement sur l'embase 44. Ces moyens de centrage comprennent essentiellement une butée 72 contre laquelle l'extrémité de la pince 4 est destinée à être en appui lorsqu'elle repose dans le premier réceptacle 52 pour y subir un sertissage de la clavette 2. La butée 72 est ainsi déportée de l'embase 44 par un tirant 74 de longueur adaptée à la géométrie de la pince 4, de sorte qu'une fois celle-ci en contact avec la butée 72, la clavette 2 se retrouve en regard du poinçon de sertissage 60, convenablement positionnée.

De la même façon, pour la seconde portion 50, un second réceptacle 76 de la pince 4 est pratiqué sur l'embase 44, ce réceptacle 76 disposant par exemple d'une section semi-circulaire de forme complémentaire de celle de l'extérieur de la pince 4, à savoir celle de la surface extérieure du verrou 12 comme cela est le mieux visible sur la figure 7. L'ouverture de ce réceptacle 76 est orientée vers le haut, à savoir opposée à la surface d'appui 54 de l'embase sur laquelle cette dernière est destinée à reposer.

En regard de ce réceptacle 76 se trouve une tête de chassage par pression 78 destinée à coopérer avec la clavette 2, cette tête de chassage 78 étant montée mobile selon une seconde direction de coulissement 80 sur le porte-têtes 46, cette seconde direction 80 étant de préférence parallèle à la verticale et à la première direction 58, et donc orthogonale à l'horizontale selon laquelle la pince 4 est destinée à reposer dans le réceptacle 76 lors d'une opération de chassage de la clavette 2.

A titre indicatif, la tête de chassage 78 prend globalement une forme connue de l'homme du métier, notamment en ce qui concerne la présence d'un poinçon de chassage 82 au niveau de son extrémité prévue pour entrer en contact avec la clavette 2. Sur la figure 6, on peut voir que la tête de chassage 78 est maintenue au repos dans une position haute alors que le poinçon 82 n'est pas au contact de la clavette, ni d'aucun autre élément. Cette fonctionnalité, de préférence adoptée, peut par exemple être réalisée à l'aide de moyens élastiques de rappel (non représentés) agencés entre le porte-têtes 46 et la tête de chassage 78, ou bien à l'aide d'un ajustage adapté. Dans un tel cas, il peut alors être fait en sorte que l'espace laissé libre sous le poinçon 82 soit suffisant pour introduire la pince 4 horizontalement, par insertion de celle-ci dans le réceptacle 76 selon son axe longitudinal 14.

Comme visible sur les figures 6 et 7, la tête de chassage 78 est équipée de moyens de butée 84, prenant par exemple la forme d'un épaulement, dont le but est de limiter sa course par rapport au corps 42 lors du chassage. De cette manière, la course de chassage est prédéfinie par rapport à la géométrie de l'outillage 40 et celle de la pince 4. Ainsi, lorsque l'épaulement 84 entre en butée de fin de course contre le porte-têtes 46, l'opérateur est avantageusement informé que l'opération de chassage est achevée, et ne peut de toute façon plus exercer de pression supplémentaire sur la clavette 2.

Comme cela est le mieux visible sur la figure 7, la tête de chassage 78 est logée dans un second logement traversant 86 du porte-têtes 46, à travers lequel il est donc en mesure de coulisser selon la seconde direction 80. De préférence, on peut faire en sorte que les géométries adoptées pour le second logement 86 et la partie coulissante de la tête de chassage 78 permettent l'introduction de celle-ci dans son orifice associé uniquement lorsqu'elle se trouve dans une orientation unique et prédéterminée par rapport au porte-têtes 46, ce qui assure avantageusement un positionnement correct du poinçon de chassage 82 par rapport au corps 42, et donc par rapport à la clavette 2 à chasser. Les risques d'endommagement de la pince 4 lors du chassage de la clavette 2 s'en trouvent de ce fait fortement amoindris. De plus, il est noté à cet égard que les premier et un second logements 66, 86 et les têtes 56, 78 disposent d'une géométrie formant système de détrompage, à savoir qu'ils interdisent le montage de la tête de sertissage 56 dans le second logement 86, et interdisant également le montage de la tête de chassage 78 dans le premier logement 66. De cette façon, les risques de détérioration de la pince 4 susceptibles d'être engendrés par une inversion involontaire des deux têtes 56, 78 sur le porte-têtes 46 sont totalement réduits à néant. A cet égard, les figures 7a et 7b montrent respectivement des exemples de sections transversales pour les têtes 56, 78, susceptibles de former un tel système de détrompage.

Enfin, il est également prévu des seconds moyens de centrage 88 de la pince 4, rapportés fixement sur l'embase 44. Ces moyens de centrage comprennent essentiellement une butée 90 contre laquelle l'extrémité de la pince 4 est destinée à être en appui lorsqu'elle repose dans le premier réceptacle 76 pour y subir un chassage de la clavette 2. La butée 90 est ainsi déportée de l'embase 44 par un tirant 92 de longueur adaptée à la géométrie de la pince 4, de sorte qu'une fois celle-ci en contact avec la butée 90, la clavette 2 se retrouve en regard du poinçon de chassage 82, convenablement positionnée. Pour des raisons diverses comme celle visant à assurer une meilleure stabilité de l'outillage 40 en fonctionnement, les deux tirants 74, 92 s'étendent dans des directions parallèles mais opposées à partir de l'embase 44 de part et d'autre de laquelle ils se situent, comme le montre clairement la figure 6.

L'une des particularités de la présente invention réside dans le fait de prévoir des moyens de pression 100 montés mobiles sur le corps 42 de manière à pouvoir être déplacés d'une position de sertissage dans laquelle ils sont capables d'exercer une pression sur la tête de sertissage 56 afin d'entraîner son déplacement dans la première direction 58, à une position de chassage montrée sur les figures 6 à 8 dans laquelle ils sont capables d'exercer une pression sur la tête de chassage 78 afin d'entraîner son déplacement dans la seconde direction 80, et inversement.

Pour ce faire, le corps comprend un pion de pivotement 102 faisant saillie vers le haut à partir du porte-têtes 46, ce pion de pivotement 102 étant agencé sensiblement verticalement selon un axe de rotation 104 des moyens de pression.

Ces moyens de pression 102 comprennent alors une tige de pression 106 montée de façon parallèle et excentrée par rapport à l'axe de rotation 104, sur un support de tige 108 emboîté de manière rotative sur le pion 102. Ainsi, l'outillage 40 est conçu et dimensionné de sorte qu'en faisant pivoter le support de tige 108 autour de l'axe de rotation 104 par rapport au pion 102, la tige de pression 106 d'axe 110 puisse venir alternativement être placée dans la position de sertissage dans laquelle son extrémité de pression se situe en regard de l'extrémité haute de la tête de sertissage 56, symbolisée par exemple par l'alignement ou presque de l'axe 110 avec la première direction 58, et dans la position de chassage représentée dans laquelle son extrémité de pression se situe en regard de l'extrémité haute de la tête de chassage 78, symbolisée par exemple par l'alignement ou presque de l'axe 110 avec la seconde direction 80.

Le support de tige 108 est bloqué en translation par rapport au pion de pivotement 102 sur lequel il est librement articulé, selon l'axe de rotation, par exemple à l'aide de deux bagues de butée 112 montées fixement sur ce même pion de pivotement 102, respectivement de part et d'autre du support de tige 108.

En outre, la tige de pression 106, dont l'extrémité basse de pression est destinée à venir alternativement en contact avec les têtes 56, 78, est montée sur le support 108 de façon à pouvoir être déplacée par rapport à celui-ci selon une direction de pression 114 parallèle à son axe 110, et en réalité confondue avec ce dernier. De préférence, pour atteindre ce but, la tige de pression 106 est montée sur le support de tige 108 de façon à pouvoir être déplacée par vissage par rapport à celui-ci, selon la direction de pression 114.

De plus, pour faciliter le vissage de la tige 106 visant à entraîner le déplacement de l'une ou l'autre des têtes 56, 78 dans sa direction de coulissement associée, les moyens de pression comprennent enfin un levier de commande 116 monté sur l'extrémité haute de cette tige de pression 106, orthogonalement et de façon coulissante par rapport à celle-ci, comme cela est visible sur les figures 6 à 8.

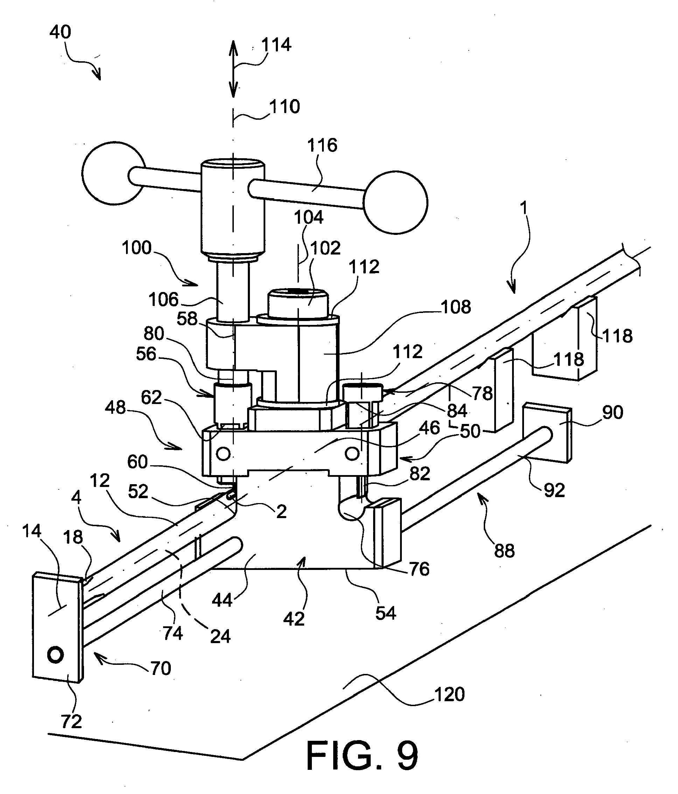

Sur la figure 9, il est illustré la mise en oeuvre d'un procédé selon l'invention de sertissage par pression de la clavette 2 dans la tige de tulipe 24 entourée par le verrou 12, cette mise en oeuvre étant réalisée à l'aide de l'outillage 40 qui vient d'être décrit.

Pour ce faire, la pince 4 déjà solidaire du dispositif de manipulation 1 est placée dans le réceptacle 52, et déplacée selon l'axe 14 jusqu'à ce que les têtes 18 de la tulipe mécanique soient en contact de la butée de centrage 72. De plus, de l'autre côté de l'outillage 40, des pièces de support 118 sont prévues pour supporter le reste du dispositif 1 à une hauteur identique à celle imposée par le réceptacle 52, ces pièces de support 118 reposant sur un banc de travail 120 de la même façon que l'embase 44 de l'outillage 40.

Ensuite, la tige de pression 106 est amenée dans la position de sertissage montrée sur la figure 9 par rotation du support 108 autour du pion de pivotement 102, position dans laquelle son extrémité basse est susceptible d'entrer en contact avec la tête de sertissage 56. Enfin, le levier 116 est tourné selon l'axe 110 de façon à entraîner la mise en mouvement selon la direction de pression de la tige 106 et de la tête 56 par contact avec celle-ci, jusqu'à ce que l'épaulement de tête 62 vienne stopper la course de sertissage par butée contre le porte-têtes 46. D'une façon connue, durant la course de sertissage, le poinçon 60 vient appuyer contre la clavette 2 qu'il déforme faiblement de manière à la fixer dans son orifice traversant associé.

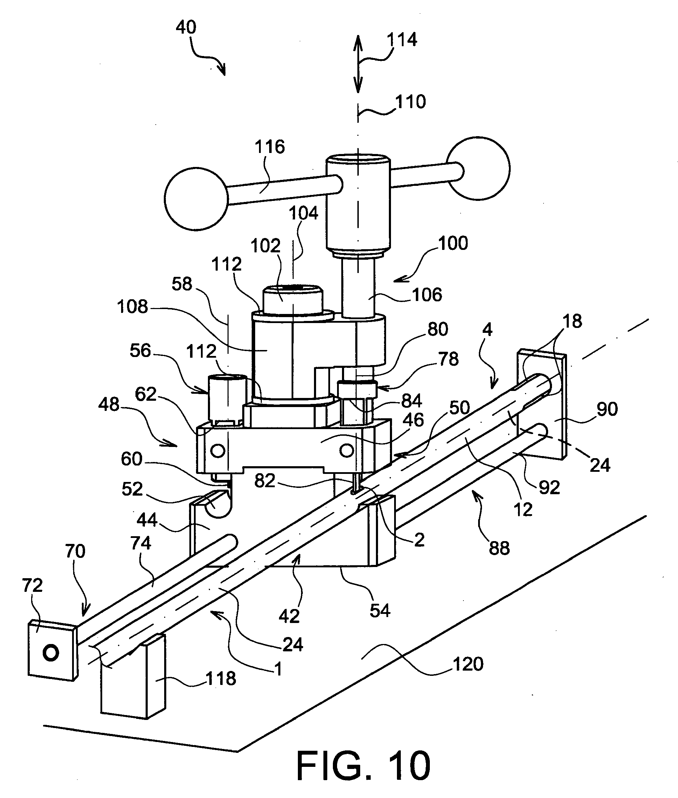

Sur la figure 10, il est illustré la mise en oeuvre d'un autre procédé selon l'invention, d'extraction par chassage par pression de la clavette 2 hors de la tige de tulipe dans laquelle elle est sertie, cette mise en oeuvre étant réalisée à l'aide de l'outillage 40 qui vient d'être décrit.

Pour ce faire, la pince 4 encore solidaire du dispositif de manipulation 1 est placée dans le réceptacle 76, et déplacée selon l'axe 14 jusqu'à ce que les têtes 18 de la tulipe mécanique soient en contact de la butée de centrage 90. De plus, de l'autre côté de l'outillage 40, des pièces de support 118 sont prévues pour supporter le reste du dispositif 1 à une hauteur identique à celle imposée par le réceptacle 76, ces pièces de support 118 reposant sur un banc de travail 120 de la même façon que l'embase 44 de l'outillage 40.

Ensuite, la tige de pression 106 est amenée dans la position de chassage montrée sur la figure 10 par rotation du support 108 autour du pion de pivotement 102, position dans laquelle son extrémité basse est susceptible d'entrer en contact avec la tête de chassage 78. Enfin, le levier 116 est tourné selon l'axe 110 de façon à entraîner la mise en mouvement selon la direction de pression de la tige 106 et de la tête 78 par contact avec celle-ci, jusqu'à ce que l'épaulement de tête 84 vienne stopper la course de sertissage par butée contre le porte-têtes 46.

Bien entendu, diverses modifications peuvent être apportées par l'homme du métier à l'invention qui vient d'être décrite, uniquement à titre d'exemples non limitatifs.

## Revendications

1. Outillage (40) servant au sertissage par pression d'une clavette/goupille (2) dans un élément (4) ainsi qu'à l'extraction par chassage par pression de ladite lavette/goupille (2) hors de cet élément (4), et qui comprend :
- un premier réceptacle (52) dudit élément (4) en regard duquel se situe une tête de sertissage par pression (56) destinée à coopérer avec ladite clavette/goupille (2), cette tête de sertissage par pression (56) étant montée mobile selon une première direction (58) sur un corps (42) de l'outillage ;
- un second réceptacle (76) dudit élément (4) en regard duquel se situe une tête de chassage par pression (78) destinée à coopérer avec ladite clavette/goupille (2), cette tête de chassage par pression (78) étant également montée mobile selon une seconde direction (80) sur ledit corps (42) de l'outillage ; et
- des moyens de pression (100) montés mobiles sur ledit corps (42) de l'outillage de manière à pouvoir être déplacés d'une position de sertissage dans laquelle ils sont capables d'exercer une pression sur ladite tête de sertissage par pression (56) afin d'entraîner son déplacement dans ladite première direction (58), à une position de chassage dans laquelle ils sont capables d'exercer une pression sur ladite tête de chassage par pression (78) afin d'entraîner son déplacement dans ladite seconde direction (80), et inversement.

2. Outillage (40) selon la revendication 1, **caractérisé en ce que** ledit corps (42) de l'outillage présente un premier et un second logements (66, 86) recevant respectivement ladite tête de sertissage par pression (56) et ladite tête de chassage par pression (78), et **en ce que** lesdits premier et second logements et lesdites tête de sertissage par pression et tête de chassage par pression (66, 86, 56, 78) disposent d'une géométrie formant système de détrompage interdisant le montage de ladite tête de sertissage par pression (56) dans le second logement (86), et interdisant le montage de ladite tête de chassage par pression (78) dans ledit premier logement (66).

3. Outillage (40) selon la revendication 1 ou la revendication 2, **caractérisé en ce que** ladite tête de sertissage par pression (56) est équipée de moyens de butée (62) capables d'entrer en contact avec ledit corps (42), afin de limiter la course de ladite tête de sertissage par pression (56), selon ladite première direction (58), par rapport audit corps (42) de l'outillage.

4. Outillage (40) selon l'une quelconque des revendications précédentes, **caractérisé en ce qu'**il comprend en outre des premiers moyens de centrage (70) de l'élément (4) par rapport à ladite tête de sertissage par pression (56), contre lesquels ledit élément (4) est destiné à être en appui lorsqu'il repose dans ledit premier réceptacle (52), et **en ce qu'**il comprend en outre des seconds moyens de centrage (88) de l'élément (4) par rapport à ladite tête de chassage par pression (78), contre lesquels ledit élément (4) est destiné à être en appui lorsqu'il repose dans ledit second réceptacle (76).

5. Outillage (40) selon l'une quelconque des revendications précédentes, **caractérisé en ce que** lesdites première et seconde directions (58, 80) attachées respectivement aux tête de sertissage par pression et tête de chassage par pression (56, 78) sont des directions de coulissement parallèles.

6. Outillage (40) selon l'une quelconque des revendications précédentes, **caractérisé en ce que** lesdits moyens de pression (100) sont montés libres en rotation sur ledit corps (42) de l'outillage, de sorte que ces moyens de pression (100) puissent être déplacés de ladite position de sertissage à ladite position de chassage, et inversement, par rotation de ces moyens de pression (100) par rapport audit corps (42), selon un axe de rotation (104).

7. Outillage (40) selon l'une quelconque des revendications précédentes, **caractérisé en ce que** lesdits moyens de pression (100) comprennent une tige de pression (106) montée sur un support de tige (108) de façon à pouvoir être déplacée par rapport à celui-ci selon une direction de pression (114), ledit support (108) étant monté libre en rotation sur un pion de pivotement (102) appartenant audit corps (42) de l'outillage et s'étendant selon un axe de rotation (104) des moyens de pression (100).

8. Outillage (40) selon la revendication 7, **caractérisé en ce que** ladite tige de pression (106) est montée sur le support de tige (108) de façon à pouvoir être déplacée par vissage par rapport à celui-ci, selon ladite direction de pression (114).

9. Outillage (40) selon la revendication 7 ou la revendication 8, **caractérisé en ce que** ledit support de tige (108) des moyens de pression (100) est bloqué en translation par rapport au pion de pivotement (102), selon ledit axe de rotation (104).

10. Outillage (40) selon l'une quelconque des revendications 7 à 9, **caractérisé en ce que** lesdits moyens de pression (100) comprennent en outre un levier de commande (116) monté sur ladite tige de pression (106).

11. Procédé de sertissage par pression d'une clavette/goupille dans un élément, ledit procédé étant mis en oeuvre à l'aide d'un outillage selon l'une quelconque des revendications précédentes en plaçant ledit élément dans ledit premier réceptacle, puis en actionnant lesdits moyens de pression placés dans la position de sertissage afin qu'ils coopèrent avec ladite tête de sertissage par pression dudit outillage.

12. Procédé d'extraction par chassage par pression d'une clavette/goupille hors d'un élément dans lequel elle est sertie, ledit procédé étant mis en oeuvre à l'aide d'un outillage selon l'une quelconque des revendications 1 à 10 en plaçant ledit élément dans ledit second réceptacle, puis en actionnant lesdits moyens de pression placés dans la position de chassage afin qu'ils coopèrent avec ladite tête de chassage par pression dudit outillage.

13. Procédé selon la revendication 11 ou la revendication 12, **caractérisé en ce que** ledit élément est une pince (4) comprenant une tulipe mécanique (10) et un verrou (12) de tulipe entourant ladite tulipe et capable d'être déplacé relativement le long de celle-ci selon une direction d'actionnement afin d'engendrer une ouverture/fermeture de ladite tulipe mécanique, ladite clavette/goupille étant destinée à être sertie dans un orifice traversant (30) d'une tige (24) de tulipe de ladite tulipe mécanique.

14. Procédé selon la revendication 13, **caractérisé en ce que** ledit orifice traversant de ladite tige de tulipe est pratiqué selon une direction orthogonale à ladite direction d'actionnement, et **en ce que** ladite clavette/goupille est destinée à présenter deux extrémités coulissantes selon ladite direction d'actionnement, respectivement dans deux trous oblongs (34) opposés pratiqués sur ledit verrou de tulipe entourant ladite tulipe mécanique.

15. Procédé selon la revendication 13 ou la revendication 14, **caractérisé en ce que** ledit élément est une pince destinée à coopérer avec un crayon (38) de combustible nucléaire pour son introduction dans un panier de rangement et/ou son extraction hors de ce panier.

## Patentansprüche

1. Werkzeug (40) zum Druck-Einpressen eines Keils/Stifts (2) in ein Element (4) sowie zur Extraktion mittels Druck-Auspressen des Keils/Stifts (2) aus diesem Element (4), und das umfasst:
• eine erste Aufnahme (52) des Elements (4), gegenüber der sich ein Druck-Einpresskopf (56) befindet, der dazu ausgelegt ist, mit dem Keil/Stift (2) zusammen zu wirken, wobei dieser Druck-Einpresskopf (56) beweglich in einer ersten Richtung (58) auf einem Körper (42) des Werkzeugs montiert ist;
• eine zweite Aufnahme (76) des Elements (4), gegenüber der sich ein Druck-Auspresskopf (78) befindet, der dazu ausgelegt ist, mit dem Keil/Stift (2) zusammen zu wirken, wobei dieser Druck-Auspresskopf (78) ebenfalls beweglich in einer zweiten Richtung (80) auf dem Körper (42) des Werkzeugs montiert ist; und
• Druckmittel (100), die beweglich auf dem Körper (42) des Werkzeugs derart montiert sind, dass sie verlagert werden können von einer Einpressposition, in der sie einen Druck auf den Druck-Einpresskopf (56) ausüben können, um seine Verlagerung in die erste Richtung (58) anzutreiben, in eine Auspressposition, in der sie einen Druck auf den Druck-Auspresskopf (78) ausüben können, um seine Verlagerung in die zweite Richtung (80) antreiben zu können, und umgekehrt.

2. Werkzeug (40) nach Anspruch 1, **dadurch gekennzeichnet, dass** der Körper (42) des Werkzeugs eine erste und eine zweite Aufnahme (66,86) aufweist, die den Druck-Einpresskopf (56) bzw. den Druck-Auspresskopf (78) aufnehmen, und dass die erste und die zweite Aufnahme sowie der Druck-Einpresskopf und der Druck-Auspresskopf (66,86, 56,78) über eine Geometrie verfügen, die ein System zur Verwechslungssicherung bildet, das die Montage des Druck-Einpresskopfs (56) in die zweite Aufnahme (86) verbietet und die Montage des Druck-Auspresskopf (78) in die erste Aufnahme (66) verbietet.

3. Werkzeug (40) nach Anspruch 1 oder Anspruch 2, **dadurch gekennzeichnet, dass** der Druck-Einpresskopf (56) mit Anschlagmitteln (62) ausgestattet ist, die in Kontakt mit dem Körper (42) gelangen können, um den Weg des Druck-Einpresskopfs (56) in der ersten Richtung (58) bezüglich des Körpers (42) des Werkzeugs zu begrenzen.

4. Werkzeug (40) nach einem der vorhergehenden Ansprüche, **dadurch gekennzeichnet, dass** es ferner erste Mittel zur Zentrierung (70) des Elements (4) bezüglich des Druck-Einpresskopfs (56) umfasst, gegen welche das Element (4) anliegen soll, wenn es in der ersten Aufnahme (52) ruht, und dass es ferner zweite Mittel zur Zentrierung (88) des Elements (4) bezüglich des Druck-Auspresskopf (78) umfasst, gegen welche das Element (4) anliegen soll, wenn es in der zweiten Aufnahme (76) ruht.

5. Werkzeug (40) nach einem der vorhergehenden Ansprüche, **dadurch gekennzeichnet, dass** die erste und die zweite Richtung (58,80), die dem Druck-Einpresskopf bzw. dem Druck-Auspresskopf (56,78) zugeordnet sind, parallele Gleitrichtungen sind.

6. Werkzeug (40) nach einem der vorhergehenden Ansprüche, **dadurch gekennzeichnet, dass** die Druckmittel (100) frei drehbar an dem Körper (42) des Werkzeugs derart montiert sind, dass die Druckmittel (100) verlagert werden können von der Einpressposition in die Auspressposition und umgekehrt durch eine Drehung dieser Druckmittel (100) bezüglich des Körpers (42) um eine Drehachse (104).

7. Werkzeug (40) nach einem der vorhergehenden Ansprüche, **dadurch gekennzeichnet, dass** die Druckmittel (100) eine Druckstange (106) umfassen, die auf einem Stangenträger (108) derart montiert ist, dass sie relativ zu diesem entlang einer Druckrichtung (114) verlagert werden kann, wobei der Träger (108) frei drehbar auf einem Schwenkelement (102) montiert ist, das zu dem Körper (42) des Werkzeugs gehört und sich entlang einer Drehachse (104) der Druckmittel (100) erstreckt.

8. Werkzeug (40) nach Anspruch 7, **dadurch gekennzeichnet, dass** die Druckstange (106) auf dem Stangenträger (108) derart montiert ist, dass sie durch Schrauben relativ zu diesem entlang der Druckrichtung (114) verlagert werden kann.

9. Werkzeug (40) nach Anspruch 7 oder Anspruch 8, **dadurch gekennzeichnet, dass** der Stangenträger (108) der Druckmittel (100) in Translation entlang der Drehachse (104) relativ zum Schwenkelement (102) blockiert ist.

10. Werkzeug (40) nach einem der Ansprüche 7-9, **dadurch gekennzeichnet, dass** die Druckmittel (100) ferner einen Steuerhebel (116) umfassen, der auf der Druckstange (106) montiert ist.

11. Verfahren zum Druck-Einpressen eines Keils/Stifts in ein Element, welches Verfahren mittels eines Werkzeugs nach einem der vorhergehenden Ansprüche durchgeführt wird, indem man das Element in der ersten Aufnahme platziert, dann die Druckmittel betätigt, die in der Einpressposition platziert sind, damit sie mit dem Einpresskopf durch Drücken des Werkzeugs zusammenwirken.

12. Verfahren zur Extraktion durch Druck-Auspressen eines Keils/Stifts aus einem Element, in welches er eingepresst ist, wobei das Verfahren mittels eines Werkzeugs nach einem der Ansprüche 1-10 durchgeführt wird, wobei man das Element in der zweiten Aufnahme platziert, dann die in der Auspressposition platzierten Druckmittel betätigt, damit sie mit dem Auspresskopf durch Drücken des Werkzeugs zusammenwirken.

13. Verfahren nach Anspruch 11 oder Anspruch 12, **dadurch gekennzeichnet, dass** das Element eine Zange (4) ist, die eine mechanische Tulpe (10) und eine Tulpensperre (12) umfasst, welche die Tulpe umgibt und dazu ausgelegt ist, relativ entlang derselben gemäß einer Betätigungsrichtung verlagert zu werden, um ein Öffnen/Schließen der mechanischen Tulpe zu bewirken, wobei der Keil/Stift dazu ausgelegt ist, in eine Durchgangsöffnung (30) einer Tulpenstange (24) der mechanischen Tulpe eingepresst zu werden.

14. Verfahren nach Anspruch 13, **dadurch gekennzeichnet, dass** die Durchgangsöffnung der Tulpenstange entlang einer Richtung orthogonal zu der Betätigungsrichtung ausgeführt ist, und dass der Keil/Stift dazu ausgelegt ist, zwei gleitende Enden in der Betätigungsrichtung jeweils in zwei gegenüberliegenden Langlöchern (34) aufzuweisen, die in der Tulpensperre ausgeführt sind, welche die mechanische Tulpe umgibt.

15. Verfahren nach Anspruch 13 oder Anspruch 14, **dadurch gekennzeichnet, dass** das Element eine Zange ist, die dazu ausgelegt ist, mit einem Kernbrennstab (38) für sein Einsetzen in einen Aufbewahrungskorb und/oder seine Extraktion aus diesem Korb zusammen zu wirken.

## Claims

1. A tool (40) used for pressure crimping of a cleat/cotter pin (2) in an element (4) as well as for extracting said cleat/cotter pin (2) from this element (4) by driving it out by pressure, and that comprises:
- a first receptacle (52) of said element (4) opposite which is located a pressure crimping head (56) intended to cooperate with said cleat/cotter pin (2), this pressure crimping head (56) being movably mounted along a first direction (58) on a body (42) of the tool;
- a second receptacle (76) of said element (4) opposite which is located a pressure drive-out head (78) intended to cooperate with said cleat/cotter pin (2), this pressure drive-out head (78) being also movably mounted along a second direction (80) on said body (42) of the tool; and
- pressure means (100) movably mounted on said body (42) of the tool in order to be able to be moved from a crimping position in which they are capable of exerting pressure on said pressure crimping head (56) in order to cause its displacement in said first direction (58), to a drive-out position in which they are capable of exerting a pressure on said pressure drive-out head (78) in order to cause its displacement in said second direction (80), and conversely.

2. The tool (40) according to claim 1, **characterized in that** said body (42) of the tool has first and second housings (66, 86) respectively receiving said pressure crimping head (56) and said pressure drive-out head (78), and **in that** said first and second housings and said pressure crimping head and pressure drive-out head (66, 86, 56, 78) have a geometry forming a foolproofing system preventing the mounting of said pressure crimping head (56) in the second housing (86) and preventing the mounting of said pressure drive-out head (78) in said first housing (66).

3. The tool (40) according to claim 1 or claim 2, **characterized in that** said pressure crimping head (56) is equipped with abutment means (62) capable of contacting said body (42), in order to limit the travel of said pressure crimping head (56), along said first direction (58), relatively to said body (42) of the tool.

4. The tool (40) according to any of the preceding claims, **characterized in that** it further comprises first means (70) for centering the element (4) relatively to said pressure crimping head (56), against which said element (4) is intended to be pressed when it rests in said first receptacle (52) and **in that** it further comprises second means (88) for centering the element (4) relatively to said pressure drive-out head (78), against which said element (4) is intended to be pressed when it rests in said second receptacle (76).

5. The tool (40) according to any of the preceding claims, **characterized in that** said first and second directions (58, 80) respectively attached to the pressure crimping head and pressure drive-out head (56, 78) are parallel sliding directions.

6. The tool (40) according to any of the preceding claims, **characterized in that** said pressure means (100) are mounted so as to be able to freely rotate on said body (42) of the tool, so that these pressure means (100) may be displaced from said crimping position to said drive-out position, and conversely, by rotation of these pressure means (100) relatively to said body (42), about an axis of rotation (104).

7. The tool (40) according to any of the preceding claims, **characterized in that** said pressure means (100) comprise a pressure rod (106) mounted on a rod support (108) so as to be able to be displaced relatively to the latter along a pressure direction (114), said support (108) being mounted so as to be able to freely rotate on a pivot pin (102) belonging to said body (42) of the tool and extending along an axis of rotation (104) of the pressure means (100).

8. The tool (40) according to claim 7, **characterized in that** said pressure rod (106) is mounted on the rod support (108) so as to be able to be displaced by screwing relatively to the latter, along said pressure direction (114).

9. The tool (40) according to claim 7 or claim 8, **characterized in that** said rod support (100) of the pressure means (100) is blocked in translation relatively to the pivot pin (102), along said axis of rotation (104).

10. The tool (40) according to any of claims 7 to 9, **characterized in that** said pressure means (100) further comprise a control lever (116) mounted on said pressure rod (106).

11. A method for pressure crimping a cleat/cotter pin in an element, said method being applied by means of a tool according to any of the preceding claims, by placing said element in said first receptacle, and then by actuating said pressure means placed in the crimping position so that they cooperate with said pressure crimping head of said tool.

12. A method for extracting a cleat/cotter pin out of an element by driving it out by pressure wherein it is crimped, said method being applied by means of a tool according to any of claims 1 to 10 by placing said element in said second receptacle, and then by actuating said pressure means placed in the drive-out position so that they cooperate with said pressure drive-out head of said tool.

13. The method according to claim 11 or to claim 12, **characterized in that** said element is a claw (4) comprising a mechanical tulip (10) and a tulip lock (10) surrounding said tulip and capable of being displaced relatively along the latter in an actuation direction in order to generate opening/closing of said mechanical tulip, said cleat/cotter pin being intended to be crimped in a through-orifice (30) of a tulip rod (24) of said mechanical tulip.

14. The method according to claim 13, **characterized in that** said through-orifice of said tulip rod is made in a direction orthogonal to said actuation direction, and **in that** said cleat/cotter pin is intended to have two sliding ends along said actuation direction, respectively in two opposite oblong holes (34) made on said tulip lock surrounding said mechanical tulip.

15. The method according to claim 13 or claim 14, **characterized in that** said element is a claw intended to cooperate with a nuclear fuel pencil (38) for its introduction into a storage basket and/or its extraction from this basket.
